# FASCICULE DE BREVET EUROPEEN

(11) **EP 3 571 755 B1**
(45) Date de publication et mention de la délivrance du brevet: **18.05.2022**
(21) Numéro de dépôt: 18703062.2
(22) Date de dépôt: 17.01.2018
(51) Int. Cl.: H02K 3/12, H02K 3/28, H02K 15/04

(54) **STATOR BOBINÉ POUR MACHINE ÉLECTRIQUE TOURNANTE**
SPULENSTATOR FÜR ROTIERENDE ELEKTRISCHE MASCHINE
COILED STATOR FOR A ROTATING ELECTRIC MACHINE

(30) Priorité: 23.01.2017 FR 1750527
(43) Date de publication de la demande: 27.11.2019
(73) Titulaire: Valeo Equipements Electriques Moteur, 94046 Créteil Cedex (FR)
(72) Inventeur: RAMET, Vincent, 62630 Etaples sur Mer (FR); DELCROIX, Eric, 62630 Etaples sur Mer (FR); LECLERCQ, Sébastien, 62630 Etaples sur Mer (FR); DEFEBVIN, Alain, 62630 Etaples sur Mer (FR)
(74) Mandataire: Valeo Powertrain Systems
(86) Numéro de dépôt international: PCT/FR2018/050117
(87) Numéro de publication internationale: WO 2018/134523

(56) Documents cités:
- EP-A1- 0 454 039
- EP-A1- 3 098 945
- WO-A1-2005/029679
- FR-A1- 2 888 059

## Description

L'invention concerne notamment un stator bobiné équipé d'enroulements formant des phases pour une machine électrique tournante de véhicule automobile.

L'invention trouve une application particulièrement avantageuse dans le domaine des machines électriques tournantes telles que les alternateurs, les alterno-démarreurs ou encore les machines réversibles. On rappelle qu'une machine réversible est une machine électrique tournante apte à travailler de manière réversible, d'une part, comme générateur électrique en fonction alternateur et, d'autre part, comme moteur électrique par exemple pour démarrer le moteur thermique du véhicule automobile.

Une machine électrique tournante comprend un rotor mobile en rotation autour d'un axe et un stator fixe entourant le rotor. En mode alternateur, lorsque le rotor est en rotation, il induit un champ magnétique au stator qui le transforme en courant électrique afin d'alimenter l'électronique du véhicule et de recharger la batterie. En mode moteur, le stator est alimenté électriquement et induit un champ magnétique entraînant le rotor en rotation.

L'invention concerne plus particulièrement un stator de machine électrique tournante comportant un corps cylindrique annulaire muni d'encoches axiales débouchantes dans lesquelles sont agencés des conducteurs électriques de manière à former un bobinage. Le bobinage est, ici, formé de plusieurs phases et est composé de conducteurs délimitant une série de spires ou boucles reliées électriquement en série qui forment un enroulement circonférentiel. Un enroulement comporte des branches axiales qui traversent les encoches et des branches de liaisons disposées à l'extérieur du corps cylindrique qui viennent faire la liaison entre les différentes branches axiales. Les branches de liaison forment alors un chignon avant et un chignon arrière s'étendant axialement en saillie de part et d'autre du corps cylindrique.

Plus particulièrement, un enroulement comporte une première demi-phase formant une strate externe de spires et une deuxième demi-phase formant une strate interne de spires superposée radialement dans l'encoche à la strate externe, la strate interne étant plus proche radialement de la paroi interne du corps que la strate externe. Chaque demi-phase comprend une superposition de spires identiques en forme d'étoiles régulières suivant un axe coaxial à l'axe de la machine.

La répartition du nombre de spires entre les demi-phases est réalisée de façon à optimiser le rangement du fil dans les chignons pour réduire leur encombrement et plus particulièrement leur épaisseur. La répartition est ainsi équilibrée c'est-à-dire que la première demi-phase comporte autant de spires que la deuxième demi-phase.

Des stators comportant ce type de bobinage sont déjà connus par exemple par le document FR 2819118. Le document FR2888059 divulgue un stator selon le préambule de la revendication 1.

La présente invention vise à permettre d'optimiser ce type de bobinage pour améliorer les performances de la machine électrique tournante.

A cet effet, la présente invention a donc pour objet un stator pour une machine électrique tournante, notamment pour véhicule automobile. Selon la présente invention, le stator comporte :
- un corps comportant des encoches qui débouchent axialement dans des parois d'extrémité axiale avant et arrière dudit corps et qui sont ouvertes radialement dans une paroi interne dudit corps,
- au moins un enroulements formant une phase du stator, l'enroulement comportant une première demi-phase formant une strate externe de spires et une deuxième demi-phase formant une strate interne de spires superposée radialement dans l'encoche à la strate externe, chaque spire comportant un fil formé d'une série de brins axiaux qui sont reçus dans une série d'encoches associées et des brins de liaisons qui relient les brins axiaux successifs en s'étendant alternativement en saillie par rapport à la paroi d'extrémité axiale avant et en saillie par rapport à la paroi d'extrémité axiale arrière pour former des chignons.

Selon l'invention, une longueur de fil de chaque spire de l'une des demi-phases est plus grande que la longueur de fil de chaque spire de l'autre demi-phase.

En outre, selon l'invention, une des demi-phases présente un nombre de spires supérieur à celui de l'autre demi-phase.

De manière inattendue, il a été constaté que le fait de déséquilibrer le nombre de spires entre les demi-phases n'impacte pas les performances électromagnétiques de la machine électrique tournante. Cette différence entre les nombres de spires respectifs des deux demi-phases associée à la réduction de la longueur de fil de chaque spire d'une des demi-phases permet de diminuer la longueur de fil totale utilisée pour réaliser un enroulement. La résistance du fil d'un enroulement est alors réduite de même que son poids et son coût de production. On améliore ainsi les performances globales de la machine électrique tournante.

Selon une réalisation, la différence entre le nombre de spires d'une des demi-phases et celui de l'autre demi-phase est strictement supérieure à 1. Autrement dit, la différence est supérieure ou égale à 2.

Selon une réalisation, la demi-phase présentant le moins de spires est celle qui présente une longueur de fil la plus courte.

Selon une réalisation, la demi-phase présentant le moins de spires est disposée radialement plus proche de la paroi interne du corps de stator que la demi-phase présentant le plus de spires.

Par exemple, la longueur de fil de chaque spire de la demi-phase la plus grande est plus grande de 2% à 10% par rapport à la longueur de fil de chaque spire de l'autre demi-phase.

Selon une réalisation, la longueur de fil de chaque spire de la deuxième demi-phase est plus grande que la longueur de fil de chaque spire de la première demi-phase de manière qu'une hauteur axiale en saillie des chignons internes de ladite deuxième demi-phase soit plus grande qu'une hauteur axiale en saillie des chignons externes de ladite première demi-phase.

Selon une réalisation, une hauteur axiale en saillie des chignons d'une des demi-phases est sensiblement égale à une hauteur axiale des chignons de l'autre demi-phase augmentée d'une hauteur globalement égale à l'épaisseur radiale occupée par les brins axiaux d'une demi-phase dans chaque encoche associée.

Selon une réalisation, les spires de chaque demi-phase d'un même enroulement sont ondulées en opposition. Ainsi, les demi-phases sont enroulées en sens inverse l'une par rapport à l'autre.

Selon une réalisation, le contour en étoile de la première demi-phase est décalé angulairement autour de l'axe central par rapport au contour en étoile de la deuxième demi-phase de manière que les brins axiaux des deux demi-phases se superposent et de manière que les brins de liaison d'une des demi-phases s'étendent radialement entre deux brins de liaison de l'autre demi-phase respectivement.

Selon une réalisation, le stator comporte au moins un système de phase comprenant plusieurs enroulements.

Selon une réalisation, au sein du même système de phase chaque enroulement présente une demi-phase avec un nombre de spires supérieur à celui de l'autre demi-phase.

En particulier, au sein du même système de phase, chaque enroulement présente la même répartition des spires entre les demi-phases. En d'autres termes, chaque enroulement du même système de phase est identique. Cela permet de ne pas déséquilibrer les résistances entre les enroulements au sein d'un même système de phase et ainsi d'éviter une baisse des performances de la machine électrique.

Selon une réalisation, le stator comporte deux systèmes de phase, chaque système de phase comportant au moins un enroulement et par exemple trois enroulements.

Selon une autre réalisation, le stator comporte un seul système de phase comportant au moins un enroulement et par exemple trois enroulements.

La présente invention a également pour objet une machine électrique tournante. La machine électrique tournante peut, avantageusement, former un alternateur, un alterno-démarreur ou une machine réversible.

La présente invention pourra être mieux comprise à la lecture de la description détaillée qui va suivre, d'exemples de mise en œuvre non limitatifs de l'invention et de l'examen des dessins annexés, sur lesquels :
- la figure 1 représente, schématiquement et partiellement, une vue en coupe d'une machine électrique tournante selon un exemple de mise en œuvre de l'invention,
- la figure 2 représente, schématiquement et partiellement, une vue de dessus d'un stator bobiné selon un exemple de mise en œuvre de l'invention,
- la figure 3 représente, schématiquement et partiellement, une vue de dessus en éclaté qui représente deux demi-phases d'un enroulement avant leur montage dans l'encoche selon un exemple de la présente invention,
- la figure 4 représente, schématiquement et partiellement, une vue de dessus qui représente l'enroulement de la figure 3 dans lequel les deux demi-phases sont superposées axialement,
- la figure 5 représente, schématiquement et partiellement, une vue en perspective des deux demi-phases de l'enroulement de la figure 4,
- la figure 6 représente, schématiquement et partiellement, une vue en perspective d'une partie d'un stator bobiné partiellement (comprenant un enroulement) selon la présente invention, et
- la figure 7 représente, schématiquement et partiellement, une vue en coupe suivant le plan Y-Y de la figure 6.

Les éléments identiques, similaires ou analogues conservent les mêmes références d'une figure à l'autre.

Les modes de réalisation qui sont décrits dans la suite ne sont nullement limitatifs ; on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. En particulier toutes les variantes et tous les modes de réalisation décrits sont combinables entre eux si rien ne s'oppose à cette combinaison sur le plan technique. Dans un tel cas, mention serait faite dans la présente description.

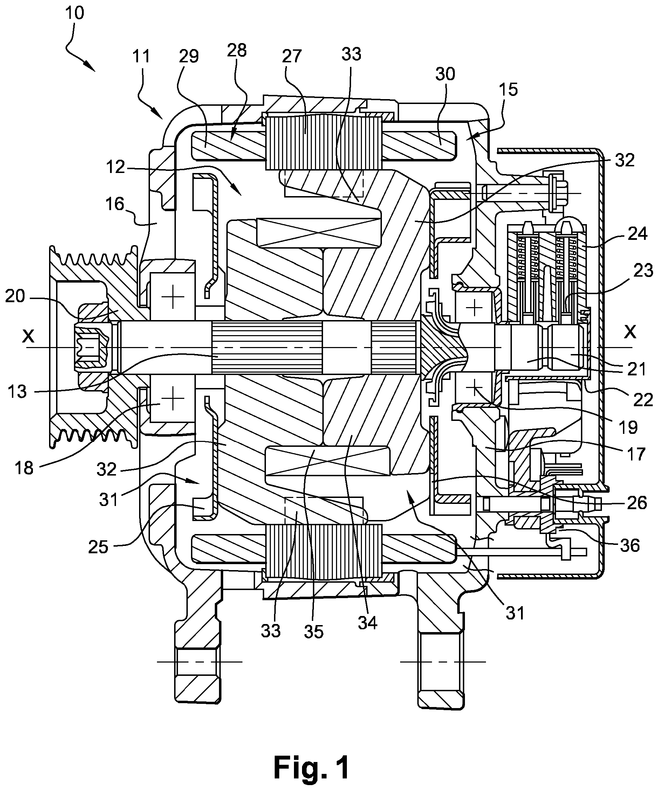

La figure 1 représente un exemple d'une machine électrique tournante 10 compacte et polyphasée, notamment pour véhicule automobile. Cette machine électrique tournante 10 transforme de l'énergie mécanique en énergie électrique, en mode alternateur, et peut fonctionner en mode moteur pour transformer de l'énergie électrique en énergie mécanique. Cette machine électrique tournante 10 est, par exemple, un alternateur, un alterno-démarreur ou une machine réversible.

La machine électrique tournante 10 comporte un carter 11. A l'intérieur de ce carter 11, elle comporte, en outre, un arbre 13, un rotor 12 solidaire en rotation de l'arbre 13 et un stator 15 entourant le rotor 12. Le mouvement de rotation du rotor 12 se fait autour d'un axe X.

Dans la suite de la description, les dénominations axiales, radiales, extérieures et intérieures se réfèrent à l'axe X traversant en son centre l'arbre 13. La direction axiale correspond à l'axe X alors que les orientations radiales correspondent à des plans concourants, et notamment perpendiculaires, à l'axe X. Pour les directions radiales, les dénominations extérieure ou intérieure s'apprécient par rapport au même axe X, la dénomination intérieure correspondant à un élément orienté vers l'axe, ou plus proche de l'axe par rapport à un second élément, la dénomination extérieure désignant un éloignement de l'axe.

Dans cet exemple, le carter 11 comporte un palier avant 16 et un palier arrière 17 qui sont assemblés ensemble. Ces paliers 16, 17 sont de forme creuse et portent, chacun, centralement un roulement à billes 18, 19 respectif pour le montage à rotation de l'arbre 13.

Une poulie 20 est fixée sur une extrémité avant de l'arbre 13, au niveau du palier avant 16, par exemple à l'aide d'un écrou en appui sur le fond de la cavité de cette poulie. Cette poulie 20 permet de transmettre le mouvement de rotation à l'arbre 13.

L'extrémité arrière de l'arbre 13 porte, ici, des bagues collectrices 21 appartenant à un collecteur 22. Des balais 23 appartenant à un porte-balais 24 sont disposés de façon à frotter sur les bagues collectrices 21. Le porte-balais 24 est relié à un régulateur de tension (non représenté).

Le palier avant 16 et le palier arrière 17 peuvent comporter, en outre, des ouvertures sensiblement latérales pour le passage de l'air en vue de permettre le refroidissement de la machine électrique tournante par circulation d'air engendrée par la rotation d'un ventilateur avant 25 sur la face dorsale avant du rotor 12, c'est-à-dire au niveau du palier avant 16 et d'un ventilateur arrière 26 sur la face dorsale arrière du rotor, c'est-à-dire au niveau du palier arrière 17.

Dans cet exemple, le rotor 12 est un rotor à griffe. Il comporte deux roues polaires 31. Chaque roue polaire 31 est formée d'un flasque 32 et d'une pluralité de griffes 33 formants des pôles magnétiques. Le flasque 32 est d'orientation transversale et présente, par exemple, une forme sensiblement annulaire. Ce rotor 12 comporte, en outre, un noyau 34 cylindrique qui est intercalé axialement entre les roues polaires 31. Ici, ce noyau 34 est formé de deux demi noyaux appartenant chacun à l'une des roues polaires. Le rotor 12 comporte, entre le noyau 34 et les griffes 33, une bobine 35 comportant, ici, un moyeu de bobinage et un bobinage électrique sur ce moyeu. Par exemple, les bagues collectrices 21 appartenant au collecteur 22 sont reliées par des liaisons filaires à ladite bobine 35. Le rotor 12 peut également comporter des éléments magnétiques interposés entre deux griffes 33 adjacentes.

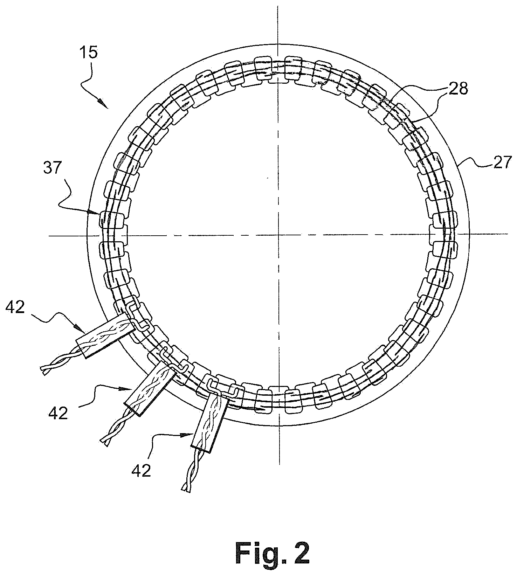

Comme illustré sur l'exemple de la figure 2, le stator 15 comporte un corps 27 cylindrique annulaire en forme d'un paquet de tôles doté d'encoches 37. Chaque encoche 37 débouche axialement dans des parois d'extrémité axiale avant 38 et arrière 39 du corps 27 et sont ouvertes radialement dans une paroi interne 40 dudit corps.

Un bobinage électrique 28 est monté sur le corps 27. Ce bobinage 28 traverse les encoches 37 du corps 27 et forment un chignon avant 29 et un chignon arrière 30 de part et d'autre du corps du stator. Le stator 15 peut être équipé d'isolant d'encoches pour le montage d'un bobinage électrique 28 à l'intérieur des encoches et/ou de calles de fermeture 41 permettant le maintien du bobinage à l'intérieur des encoches 37. Le bobinage 28 est connecté, par exemple, en étoile ou encore en triangle.

Le bobinage 28 est formé de plusieurs phases, chaque phase formant un enroulement 43. Chaque enroulement comporte au moins un conducteur traversant les encoches 37 et forme, avec toutes les phases, les chignons. Le bobinage 28 est relié électriquement via des sorties de phase 42 à un ensemble électronique 36.

L'ensemble électronique 36 comporte au moins un module électronique de puissance permettant de piloter une phase du bobinage 28. Ce module de puissance forme un pont redresseur de tension pour transformer la tension alternative générée par l'alternateur 10 en une tension continue pour alimenter notamment la batterie et le réseau de bord du véhicule.

Lorsque le bobinage électrique 28 est alimenté électriquement à partir des balais, le rotor 4 est magnétisé et devient un rotor inducteur avec formation de pôles magnétiques Nord-Sud au niveau des griffes 19. Ce rotor inducteur crée un courant induit alternatif dans le stator induit lorsque l'arbre 3 est en rotation. Le pont redresseur 9 transforme alors ce courant induit alternatif en un courant continu, notamment pour alimenter les charges et les consommateurs du réseau de bord du véhicule automobile ainsi que pour recharger sa batterie.

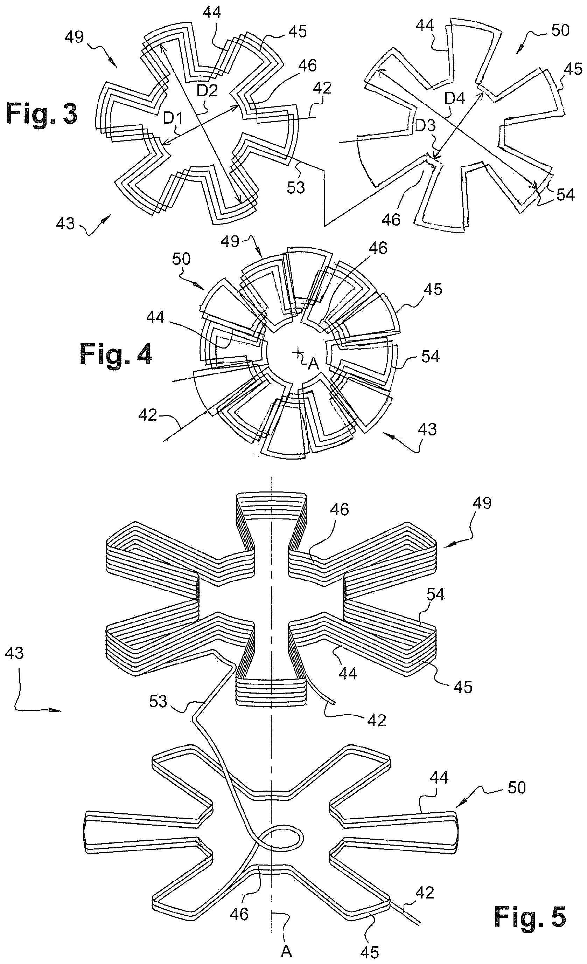

Comme illustré sur les figures 3 à 7, un enroulement 43 comporte des spires 54 ondulées d'un ou plusieurs fils. Chaque spire 54 comporte une série de brins axiaux 44 qui sont reçus dans une série d'encoches 37 associées et des brins de liaison 45, 46 qui relient les brins axiaux successifs en s'étendant alternativement en saillie par rapport à la paroi d'extrémité axiale avant et en saillie par rapport à la paroi d'extrémité axiale arrière. Ainsi les brins de liaison supérieure 45 forment le chignon avant 29 et les brins de liaison inférieure 46 forment le chignon arrière 30 du bobinage électrique 28.

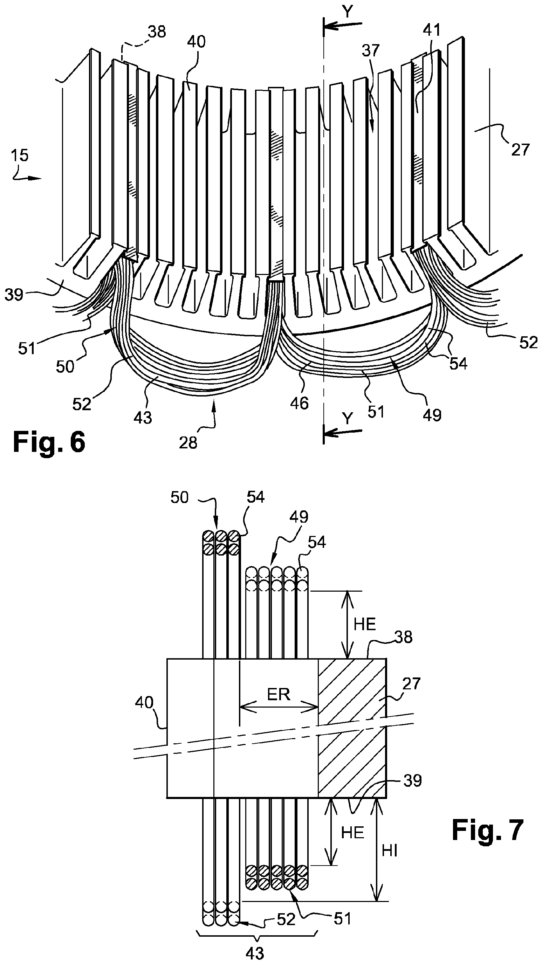

Dans l'exemple représenté sur les figures 6 et 7, le bobinage électrique 28 est un bobinage double triphasé, c'est-à-dire comportant six phases ou six enroulements 43. Ce bobinage 28 comprend alors un premier système de phases 47 et un second système de phases 48, chacun comportant trois enroulements 43. Une série encoche 37 est associée à un des six enroulements 43. Deux encoches consécutives d'une même série d'encoche sont séparées par des encoches adjacentes correspondant chacune à une autre série d'encoche associée à l'un des cinq autres enroulements 43. Ainsi, pour un stator hexaphasé comme dans l'exemple prit ici, cinq encoches adjacentes sont laissées libres entre deux encoches de chaque série. En d'autres termes, les fils d'un enroulement 43 sont insérés dans une encoche sur six encoches adjacentes. Alternativement, le bobinage électrique 28 pourra comporter un autre nombre de phases, par exemple comme représenté sur la figure 2, le bobinage électrique 28 peut être un bobinage triphasé comportant trois phases.

Pour simplifier la compréhension des figures 3 à 7, on a représenté le stator avec un seul enroulement, cependant, un tel stator comporte par exemple six enroulements ou encore trois enroulements qui sont analogues à celui qui est représenté à lesdites figures.

Chaque enroulement 43 comporte une première demi-phase 49 formant une strate externe 51 de spires 54 et une deuxième demi-phase 50 formant une strate interne 52 de spires 54 superposée radialement dans l'encoche 37 à la strate externe 51. Les deux demi-phases 49, 50 sont reliées électriquement entre elles par une portion de liaison 53.

La strate interne 52 est plus proche radialement de la paroi interne 40 du corps 27 que la strate externe 51. Ainsi, les brins axiaux 44 de chaque demi-phase sont disposés dans les encoches 37 de manière à ce que les brins axiaux de la deuxième demi-phase 50 soit radialement plus proche de la paroi interne 40 que les brins axiaux de la première demi-phase 49. Les brins de liaison 45, 46 de la première demi-phase 49 forment des chignons externes appartenant à la strate externe 51 et les brins de liaison 45, 46 de la deuxième demi-phase 50 forment des chignons internes appartenant à la strate externe 52. Chaque chignon avant 29 et arrière 30 est composé de chignon interne et de chignon externe.

Chaque demi-phase 49, 50 comprend une superposition de spires identiques en forme d'étoiles régulières d'axe A, l'axe A étant coaxial à l'axe X de la machine.

Les spires de chaque demi-phase 49, 50 d'un même enroulement 43 sont ondulées en opposition. Ainsi, les brins de liaison supérieure 45 de la première demi-phase 49 et les brins de liaison supérieure 45 de la deuxième demi-phase 50 sont décalé angulairement autour de l'axe A et de même pour les brins de liaison inférieure 46. En outre, les spires de la première demi-phase 49 sont enroulées par exemple dans le sens horaire et les spires de la deuxième demi-phase 50 sont enroulées dans le sens antihoraire.

Ce type d'enroulement est connu sous le nom « ondulé réparti ». Un tel bobinage et son procédé d'insertion sont par exemple détaillés dans le document FR 2846481.

Un procédé connu d'insertion des enroulements 43 dans le corps 27 du stator est décrit succinctement par la suite.

L'enroulement de phase 43 est, dans une première étape de montage, formé à plat, c'est-à-dire que les spires 54 s'étendent chacune dans un plan sensiblement perpendiculaire à l'axe A. Dans une seconde étape de montage, l'enroulement 43 est monté sur le corps 27 du stator par déformation. Plus précisément, l'enroulement 43 est positionné dans les encoches 37 par torsion progressive des brins axiaux 44 axialement d'arrière en avant et par basculement simultané de tous les brins axiaux d'une direction perpendiculaire à l'axe A vers une direction parallèle audit axe A. Cette déformation est par exemple obtenue en faisant coulisser un bloc d'insertion non représenté ici.

Ces étapes de montage sont ensuite répétées de manière à insérer les autres enroulements 43 pour former le bobinage électrique 28.

Pour faciliter l'insertion des autres enroulements, les chignons des strates externe 51 et interne 52 de l'enroulement déjà montée sont repoussés radialement vers l'extérieur pour dégager les orifices axiaux des encoches libres qui ne font pas partie de la série d'encoches associée à cet enroulement. Cette opération permet de dégager les orifices axiaux des encoches pour ne pas gêner l'insertion des autres enroulements et notamment de manière à ne pas interférer avec les autres chignons.

Pour chaque demi-phase 49, 50, les brins axiaux 44 ont une longueur identique. Cependant, les brins de liaison 45, 46 de la deuxième demi-phase 50 sont plus long que les brins de liaison 45, 46 de la première demi-phase 49.

Plus particulièrement, les brins de liaison supérieure 45 de la deuxième demi-phase 50 sont agencés sur un cercle de diamètre D4 centré sur l'axe A, le diamètre D4 étant supérieur au diamètre D2 du cercle sur lequel s'étendent les brins de liaison supérieure 45 de la première demi-phase 49.

En outre, les brins de liaison inférieure 46 de la deuxième demi-phase 50 sont agencés sur un cercle de diamètre D3 centré sur l'axe A, le diamètre D3 étant supérieur au diamètre D1 du cercle sur lequel s'étendent les brins de liaison inférieure 46 de la première demi-phase 49.

Ainsi, comme représenté à la figure 4, les brins de liaison 45, 46 de la deuxième demi-phase 50 dépassent radialement vers l'intérieur et vers l'extérieur par rapport à ceux de ladite demi-phase 49.

Plus particulièrement, la longueur des brins de liaison 45, 46 de la deuxième demi-phase 50 est ici égale à la longueur des brins de liaison 45, 46 de la première demi-phase 49 augmentée d'une épaisseur radiale ER que les brins axiaux 44 occuperont dans une encoche associée 37 lorsque l'enroulement 43 sera montée dans le corps 27 de stator.

Par exemple, la longueur de fil de chaque spire 54 de la deuxième demi-phase 50 est plus grande de 2% à 10% par rapport à celle de chaque spire 54 de la première demi-phase 49.

Ainsi, comme représenté à la figure 7, lorsqu'un enroulement 43 est monté sur le corps 27, les chignons de la strate interne 52 ont une hauteur axiale HI plus grande que qu'une hauteur axiale HE des chignons de la strate externe 51. On définit la hauteur axiale d'un chignon comme étant la distance axiale entre une des parois d'extrémité axiale 38, 39 du corps 27 depuis laquelle s'étend axialement le chignon et le point le plus éloigné de la voûte interne formée par ledit chignon.

Ainsi, lorsque les chignons sont repoussés radialement vers l'extérieur, les encoches 37 sont parfaitement dégagées pour l'insertion des autres enroulements mais aucun des chignons ne dépasse radialement vers l'extérieur du corps du stator, l'encombrement de la machine n'est est donc diminué.

En outre, comme bien visible que les figures 3 à 7, une des demi-phases 49, 50 de l'enroulement 43 présente un nombre de spires 54 supérieur à celui de l'autre demi-phase 49, 50.

En particulier, la demi-phase 49, 50 présentant le moins de spires 54 est celle qui présente une longueur de fil la plus courte. Ainsi, la première demi-phase 49 présente, ici, un plus grand nombre de spires 54 que la deuxième demi-phase 50.

Dans l'exemple de la figure 3, l'enroulement 43 comporte six spires 54. Ces spires 54 sont réparties de manière à ce que la première demi-phase comporte quatre spires 54 et à ce que la deuxième demi-phase comporte deux spires 54.

Dans un autre exemple illustré sur la figure 7, l'enroulement 43 comporte huit spires 54. Ces spires 54 sont réparties de manière à ce que la première demi-phase comporte cinq spires 54 et à ce que la deuxième demi-phase comporte trois spires 54.

Dans un autre exemple non représenté, l'enroulement 43 pourrait comporter sept spires 54. Ces spires 54 pourraient alors être réparties de manière à ce que la première demi-phase comporte cinq spires 54 et à ce que la deuxième demi-phase comporte deux spires 54.

De préférence, la différence entre le nombre de spires 54 d'une des demi-phases 49, 50 et celui de l'autre demi-phase 49, 50 est strictement supérieure à 1.

De préférence, tous les enroulements 43 d'un même système de phase présentent une demi-phase 49, 50 avec un nombre de spires 54 supérieur à celui de l'autre demi-phase 49, 50. En particulier, les enroulements 43 de ce même système de phase présente la même répartition du nombre de spires 54 entre la première et la deuxième demi-phase afin de ne pas déséquilibrer les résistances respectives desdits enroulements 43. En outre, tous les enroulements 43 du bobinage électrique 28 présentent une demi-phase 49, 50 avec un nombre de spires 54 supérieur à celui de l'autre demi-phase 49, 50, et en particulier la même répartition du nombre de spires 54 entre les demi-phases.

De préférence, les deux demi-phases 49, 50 et la portion de liaison 53 sont constitués par un unique fil ou par un unique faisceau d'au moins deux fils en parallèle.

Dans une variante de réalisation non représentée, au moins un des enroulements 43 peut présenter une longueur de fil totale inférieure à celle des autres enroulements. Par longueur de fil totale on entend la longueur du fil entre les portions du fil qui forment les sorties de phases 42. Dans cette réalisation, au moins un enroulement 43 du second système de phase 48 présente une longueur de fil inférieure à celle d'un enroulement 43 du premier système de phase 47. En particulier, les trois enroulements 43 du second système de phase 48 présente chacun une longueur de fil inférieure à celle des trois enroulements 43 du premier système de phase 47. De préférence, au sein d'un même système de phase, les enroulements 43 présentent une même longueur de fil.

De préférence, le diamètre de fil utilisé pour les différents enroulements reste le même d'un système de phases à l'autre.

L'invention a été décrite en référence à un procédé dans lequel les enroulements sont montés successivement l'un après l'autre dans le corps de stator. Cependant, l'invention est aussi applicable pour des procédés de montage dans lesquels au moins deux enroulements, voire tous les enroulements, sont montés simultanément dans le corps de stator.

La présente invention trouve des applications en particulier dans le domaine des stators pour alternateur ou machine réversible mais elle pourrait également s'appliquer à tout type de machine tournante.

Bien entendu, la description qui précède a été donnée à titre d'exemple uniquement et ne limite pas le domaine de la présente invention dont on ne sortirait pas en remplaçant les différents éléments par tous autres équivalents.

## Revendications

1. Stator pour une machine électrique tournante, notamment pour véhicule automobile, le stator (15) comportant :
- un corps (27) comportant des encoches (37) qui débouchent axialement dans des parois d'extrémité axiale avant (38) et arrière (39) dudit corps et qui sont ouvertes radialement dans une paroi interne (40) dudit corps,
- au moins un enroulements (43) formant une phase du stator (15), l'enroulement comportant une première demi-phase (49) formant une strate externe (51) de spires (54) et une deuxième demi-phase (50) formant une strate interne (52) de spires (54) superposée radialement dans l'encoche (37) à la strate externe, chaque spire comportant un fil formé d'une série de brins axiaux (44) qui sont reçus dans une série d'encoches (37) associées et des brins de liaisons (45, 46) qui relient les brins axiaux (44) successifs en s'étendant alternativement en saillie par rapport à la paroi d'extrémité axiale avant (38) et en saillie par rapport à la paroi d'extrémité axiale arrière (39) pour former des chignons, une longueur de fil de chaque spire (54) de l'une des demi-phases (49, 50) étant plus grande que la longueur de fil de chaque spire (54) de l'autre demi-phase (49, 50), le stator (15) étant **caractérisé en ce qu'**une des demi-phases (49, 50) présente un nombre de spires (54) supérieur à celui de l'autre demi-phase (49, 50).

2. Stator selon la revendication 1, **caractérisé en ce que** la différence entre le nombre de spires (54) d'une des demi-phases (49, 50) et celui de l'autre demi-phase (49, 50) est strictement supérieure à 1.

3. Stator selon la revendication 2 ou 1, **caractérisé en ce que** la demi-phase (49, 50) présentant le moins de spires (54) est celle qui présente une longueur de fil la plus courte.

4. Stator selon l'une quelconque des revendications 1 à 3, **caractérisé en ce que** la demi-phase (49, 50) présentant le moins de spires (54) est disposée radialement plus proche de la paroi interne (40) du corps (27) de stator que la demi-phase (49, 50) présentant le plus de spires (54).

5. Stator l'une quelconque des revendications 1 à 4, **caractérisé en ce que** la longueur de fil de chaque spire (54) de la demi-phase (49, 50) la plus grande est plus grande de 2% à 10% par rapport à la longueur de fil de chaque spire (54) de l'autre demi-phase (49, 50).

6. Stator selon la revendication 5, **caractérisé en ce qu'**une hauteur axiale (HE) en saillie des chignons d'une des demi-phases (49, 50) est sensiblement égale à une hauteur axiale (HI) des chignons de l'autre demi-phase (49, 50) augmentée d'une hauteur globalement égale à l'épaisseur radiale occupée par les brins axiaux (44) d'une demi-phase (49, 50) dans chaque encoche (37) associée.

7. Stator selon l'une quelconque des revendications 4 à 6, **caractérisé en ce que** les spires (54) de chaque demi-phase (49, 50) d'un même enroulement (43) sont ondulées en opposition

8. Stator selon l'une quelconque des revendications 1 à 7, **caractérisé en ce que** le stator (15) comporte au moins un système de phase comprenant plusieurs enroulements (43) et **en ce qu'**au sein du même système de phase chaque enroulement présente la même répartition des spires (54) entre les demi-phases (49, 50).

9. Machine électrique tournante comprenant un stator (15) selon l'une quelconque des revendications 1 à 8.

10. Machine électrique tournante selon la revendication 9, formant un alternateur ou un alterno-démarreur ou une machine réversible.

## Patentansprüche

1. Stator für eine rotierende elektrische Maschine, insbesondere für ein Kraftfahrzeug, wobei der Stator (15) Folgendes umfasst:
- einen Körper (27), der Nuten (37) umfasst, die axial an einer vorderen (38) und einer hinteren (39) axialen Stirnwand des Körpers münden und die radial an einer Innenwand (40) des Körpers geöffnet sind,
- mindestens eine Wicklung (43), die eine Phase des Stators (15) bildet, wobei die Wicklung eine erste Halbphase (49), die eine äußere Schicht (51) von Windungen (54) bildet, und eine zweite Halbphase (50), die eine innere Schicht (52) von Windungen (54) bildet, die die äußere Schicht in der Nut (37) radial überlagert, umfasst, wobei jede Windung einen Leiter umfasst, der aus Folgendem gebildet ist: einer Reihe von axialen Strängen (44), die in einer Reihe von assoziierten Nuten (37) aufgenommen sind, und Verbindungssträngen (45, 46), die die aufeinanderfolgenden axialen Stränge (44) verbinden, indem sie sich abwechselnd mit Bezug auf die vordere axiale Stirnwand (38) vorstehend und mit Bezug auf die hintere axiale Stirnwand (39) vorstehend erstrecken, um Wicklungsköpfe zu bilden, wobei eine Leiterlänge jeder Windung (54) einer der Halbphasen (49, 50) größer als die Leiterlänge jeder Windung (54) der anderen Halbphase (49, 50) ist, wobei der Stator (15) **dadurch gekennzeichnet ist, dass** eine der Halbphasen (49, 50) eine größere Anzahl von Windungen (54) als die andere Halbphase (49, 50) aufweist.

2. Stator nach Anspruch 1, **dadurch gekennzeichnet, dass** die Differenz zwischen der Anzahl von Windungen (54) einer der Halbphasen (49, 50) und derjenigen der anderen Halbphase (49, 50) in jedem Fall größer als 1 ist.

3. Stator nach Anspruch 2 oder 1, **dadurch gekennzeichnet, dass** die Halbphase (49, 50), die am wenigsten Windungen (54) aufweist, diejenige ist, die eine kürzeste Leiterlänge aufweist.

4. Stator nach einem der Ansprüche 1 bis 3, **dadurch gekennzeichnet, dass** die Halbphase (49, 50), die die wenigsten Windungen (54) aufweist, radial näher an der Innenwand (40) des Körpers (27) des Stators angeordnet ist als die Halbphase (49, 50), die die meisten Windungen (54) aufweist.

5. Stator nach einem der Ansprüche 1 bis 4, **dadurch gekennzeichnet, dass** die größte Leiterlänge jeder Windung (54) der Halbphase (49, 50) mit Bezug auf die Leiterlänge jeder Windung (54) der anderen Halbphase (49, 50) um 2 % bis 10 % größer ist.

6. Stator nach Anspruch 5, **dadurch gekennzeichnet, dass** eine vorstehende axiale Höhe (HE) der Wicklungsköpfe einer der Halbphasen (49, 50) im Wesentlichen gleich einer axialen Höhe (HI) der Wicklungsköpfe der anderen Halbphase (49, 50) plus einer Höhe ist, die im Wesentlichen gleich der radialen Dicke ist, die von den axialen Strängen (44) einer Halbphase (49, 50) in jeder assoziierten Nut (37) belegt wird.

7. Stator nach einem der Ansprüche 4 bis 6, **dadurch gekennzeichnet, dass** die Windungen (54) jeder Halbphase (49, 50) einer gleichen Wicklung (43) versetzt gewickelt sind.

8. Stator nach einem der Ansprüche 1 bis 7, **dadurch gekennzeichnet, dass** der Stator (15) mindestens ein Phasensystem umfasst, das mehrere Wicklungen (43) beinhaltet, und dass innerhalb eines gleichen Phasensystems jede Wicklung dieselbe Aufteilung von Windungen (54) zwischen den Halbphasen (49, 50) aufweist.

9. Rotierende elektrische Maschine, die einen Stator (15) nach einem der Ansprüche 1 bis 8 beinhaltet.

10. Rotierende elektrische Maschine nach Anspruch 9, die eine Lichtmaschine, einen Startergenerator oder eine umschaltbare Maschine bildet.

## Claims

1. Stator for a rotary electric machine, in particular for a motor vehicle, the stator (15) having:
- a body (27) having slots (37) which lead in the axial direction into front (38) and rear (39) axial end walls of said body and which are open in the radial direction in an internal wall (40) of said body,
- at least one winding (43) forming a phase of the stator (15), the winding having a first half-phase (49) forming an external layer (51) of turns (54) and a second half-phase (50) forming an internal layer (52) of turns (54) which is superposed radially in the slot (37) with respect to the external layer, each turn having a wire formed by a series of axial strands (44) that are accommodated in a series of associated slots (37) and connection strands (45, 46) that connect the successive axial strands (44) by extending alternately in protrusion from the front axial end wall (38) and in protrusion from the rear axial end wall (39) so as to form bundles, a wire length of each turn (54) of one of the half-phases (49, 50) being greater than the wire length of each turn (54) of the other half-phase (49, 50), the stator (15) being **characterized in that** one of the half-phases (49, 50) has a number of turns (54) greater than that of the other half-phase (49, 50).

2. Stator according to Claim 1, **characterized in that** the difference between the number of turns (54) of one of the half-phases (49, 50) and that of the other half-phase (49, 50) is strictly greater than 1.

3. Stator according to Claim 2 or 1, **characterized in that** the half-phase (49, 50) having fewer turns (54) is that which has the shortest wire length.

4. Stator according to any one of Claims 1 to 3, **characterized in that** the half-phase (49, 50) having fewer turns (54) is disposed in the radial direction closer to the internal wall (40) of the stator body (27) than the half-phase (49, 50) having more turns (54) is.

5. Stator according to any one of Claims 1 to 4, **characterized in that** the wire length of each turn (54) of the largest half-phase (49, 50) is 2% to 10% greater than the wire length of each turn (54) of the other half-phase (49, 50).

6. Stator according to Claim 5, **characterized in that** a protruding axial height (HE) of the bundles of one of the half-phases (49, 50) is substantially equal to an axial height (HI) of the bundles of the other half-phase (49, 50) increased by a height that is generally equal to the radial thickness taken up by the axial strands (44) of a half-phase (49, 50) in each associated slot (37) .

7. Stator according to any one of Claims 4 to 6, **characterized in that** the turns (54) of each half-phase (49, 50) of one and the same winding (43) undulate in opposite directions.

8. Stator according to any one of Claims 1 to 7, **characterized in that** the stator (15) has at least one phase system comprising multiple windings (43), and **in that** within the same phase system each winding has the same distribution of turns (54) between the half-phases (49, 50).

9. Rotary electric machine comprising a stator (15) according to any one of Claims 1 to 8.

10. Rotary electric machine according to Claim 9, forming an alternator or a starter-alternator or reversible machine.
